# EUROPEAN PATENT APPLICATION

(11) **EP 3 832 836 A1**
(43) Date of publication of application: **09.06.2021**
(21) Application number: 19843749.3
(22) Date of filing: 31.07.2019
(51) Int. Cl.: H02J 7/00, B60L 53/67, B60L 53/80, H01M 10/42, H02J 7/02, H02J 13/00

(54) **CHARGING SYSTEM, CHARGING DEVICE, CHARGING METHOD, AND PROGRAM**

(30) Priority: 31.07.2018 JP 2018143634
(71) Applicant: HONDA MOTOR CO., LTD., Minato-ku Tokyo 107-8556 (JP)
(72) Inventor: KAWAMURA, Masayuki, Wako-shi, Saitama 351-0193 (JP); ENDO, Hirotaka, Wako-shi, Saitama 351-0193 (JP)
(74) Representative: Herzog, Markus
(86) International application number: PCT/JP2019/030021
(87) International publication number: WO 2020/027199

(57) **Abstract**

A charging system includes: a battery which is detachably attached to a moving body which is movable utilizing electric power; a charging device which charges a plurality of batteries; and an acquisition unit which acquires the number of batteries to be charged and/or the number of batteries not to be charged among the plurality of batteries on the basis of battery usage information indicating a usage state of the batteries of a user.

## Description

### TECHNICAL FIELD

The present invention relates to a charging system, a charging device, a charging method, and a program.

Priority is claimed on Japanese Patent Application No. 2018-143634, filed on July 31, 2018, the contents of which are incorporated herein by reference.

### Background

A sharing service in which a battery (battery) serving as a drive source of an electric vehicle is configured as a detachable-type and shared by a plurality of users is known. In this service, a charging station for storing and charging one or more detachable batteries is installed, and a mechanism for charging a user who uses the charging station is established.

For example, Patent Document 1 describes a collection/charging/distribution device that collects, charges, and distributes portable electric energy storage devices when the portable electric energy storage devices (detachable batteries) are used and electric power thereof has been consumed. Therefore, in the technology described in Patent Document 1, the collection/charging/distribution devices each have a plurality of containers that detachably accommodate the portable electric energy storage devices for collecting, charging, and distributing.

In such a battery-sharing service, a user takes out a detachable battery that needs to be charged from an electric vehicle and returns the detachable battery to the collection/charging/distribution device. At this time, the user takes out a charged detachable battery from the collection/charging/distribution device and attaches the charged detachable battery to the electric vehicle. In this case, charged detachable batteries are waiting in the collection/charging/distribution device in preparation for replacement with the detachable batteries of users.

For example, Patent Document 2 discloses a portable charging/power-supply device including a battery and a charging/power-supply unit in which a housing chamber capable of accommodating the battery is formed as an example of a mobile body into which a battery can be detachably loaded.

### [Related Art Documents]

### [Patent Documents]

### [Patent Document 1]

Published Japanese Translation No. 2014-527689 of the PCT International Publication

### [Patent Document 2]

Japanese Unexamined Patent Application, First Publication No. 2019-068552

### SUMMARY OF INVENTION

### PROBLEMS TO BE SOLVED BY THE INVENTION

However, a capacity of a battery (battery) deteriorates according to the conditions of use and environmental conditions when the battery is stored. For example, a battery generally has a high state of charge (SOC; remaining capacity) and deteriorates in a short period of time. In the technology described in Patent Document 1, since an SOC of the battery in the electric vehicle depends on usage of the user, it is not possible to actively perform a control.

An aspect of the present invention is to provide a charging system, a charging device, a charging method, and a program in which an SOC of a battery can be actively controlled.

### MEANS FOR SOLVING THE PROBLEM

(1) A charging system according to one aspect of the present invention includes: a battery which is detachably attached to a moving body which is movable utilizing electric power; a charging device which charges a plurality of batteries; and an acquisition unit which acquires a number of batteries to be charged and/or a number of batteries not to be charged among the plurality of batteries based on battery usage information indicating a usage state of the batteries of a user.
(2) In the charging system described above, the acquisition unit may calculate an expected value of the number of batteries used for each time period based on the battery usage information and acquire the number of batteries to be charged and/or the number of batteries not to be charged among the plurality of batteries based on the calculated expected value.
(3) In the charging system described above, the acquisition unit may calculate an expected value of the number of batteries used for each day of the week and for each time period based on the battery usage information and acquire the number of batteries to be charged and/or the number of batteries not to be charged among the plurality of batteries based on the calculated expected value.
(4) In the charging system described above, the acquisition unit may calculate an expected value of the number of batteries used for each weather type and for each time period based on the battery usage information and acquire the number of batteries to be charged and/or the number of batteries not to be charged among the plurality of batteries based on the calculated expected value.
(5) In the charging system described above, the acquisition unit may acquire the number of batteries to be charged and/or the number of batteries not to be charged among the plurality of batteries when the battery is lent from the charging device or when the battery is returned to the charging device.
(6) In the charging system described above, the battery usage information may be lending date/time information indicating a date and time when the battery is lent.
(7) A charging device according to another aspect of the present invention includes: a charging unit which charges a plurality of batteries detachably attached to a moving body which is movable utilizing electric power; and an acquisition unit which acquires a number of batteries to be charged and/or a number of batteries not to be charged among the plurality of batteries based on battery usage information indicating a usage state of the batteries of a user.
(8) A charging method according to yet another aspect of the present invention includes: a step of charging a plurality of batteries detachably attached to a moving body which is movable utilizing electric power; and a step of acquiring a number of batteries to be charged and/or a number of batteries not to be charged among the plurality of batteries based on battery usage information indicating a usage state of the batteries of a user.
(9) Still another aspect of the present invention is a program which causes a computer to execute a step of charging a plurality of batteries detachably attached to a moving body which is movable utilizing electric power; and a step of acquiring a number of batteries to be charged and/or a number of batteries not to be charged among the plurality of batteries based on battery usage information indicating a usage state of the batteries of a user.
(10) Yet still another aspect of the present invention is a computer-readable storage medium including the above-described program.

### ADVANTAGE OF THE INVENTION

According to the above-described (1), and (6) to (10), since the number of batteries to be charged and/or the number of batteries not to be charged among the plurality of batteries are acquired on the basis of the state in which the battery has been used by the user, the SOC of the battery can be actively controlled.

According to (2) described above, the number of batteries used for each time period can be obtained with high accuracy using the expected value calculated for each time period.

According to (3) described above, the number of batteries to be charged and/or the number of batteries not to be charged among the plurality of batteries for each day of the week and for each time period can be acquired.

According to (4) described above, the number of batteries to be charged and/or the number of batteries not to be charged among the plurality of batteries for each weather type and for each time period can be acquired.

According to (5) described above, by acquiring the number of batteries to be charged and/or the number of batteries not to be charged among the plurality of batteries when a battery is lent from the charging device or when a battery is returned to the charging device, the number thereof can be acquired in accordance with a timing of use by the user.

### BRIEF DESCRIPTION OF THE DRAWINGS

Fig. 1 is a view illustrating an overall configuration of a battery-sharing service system in an embodiment.
Fig. 2 is a diagram showing a configuration example of a detachable battery according to the embodiment.
Fig. 3 is a diagram showing a configuration example of a charging station according to the embodiment.
Fig. 4 is a diagram showing a configuration example of a management server according to the embodiment.
Fig. 5 is a view illustrating a state example of detachable batteries stored in the charging station according to the embodiment.
Fig. 6 is a diagram showing an expected value and the number of batteries for use according to the embodiment.
Fig. 7 is a diagram showing an example of expected values stored in a storage unit of the management server according to the embodiment.
Fig. 8 is a diagram showing an example of the number of batteries for use stored in the storage unit of the management server according to the embodiment.
Fig. 9 is a flowchart of preparation processing performed by the charging station and the management server according to the embodiment.
Fig. 10 is a flowchart of charging determination processing performed by the charging station according to the embodiment.

### DESCRIPTION OF THE EMBODIMENTS

Hereinafter, embodiments of the present invention will be described with reference to the drawings. In the drawings used in the following description, scales of each member will be appropriately changed so that a size of each member is recognizable.

### <Embodiment>

### [Overall configuration]

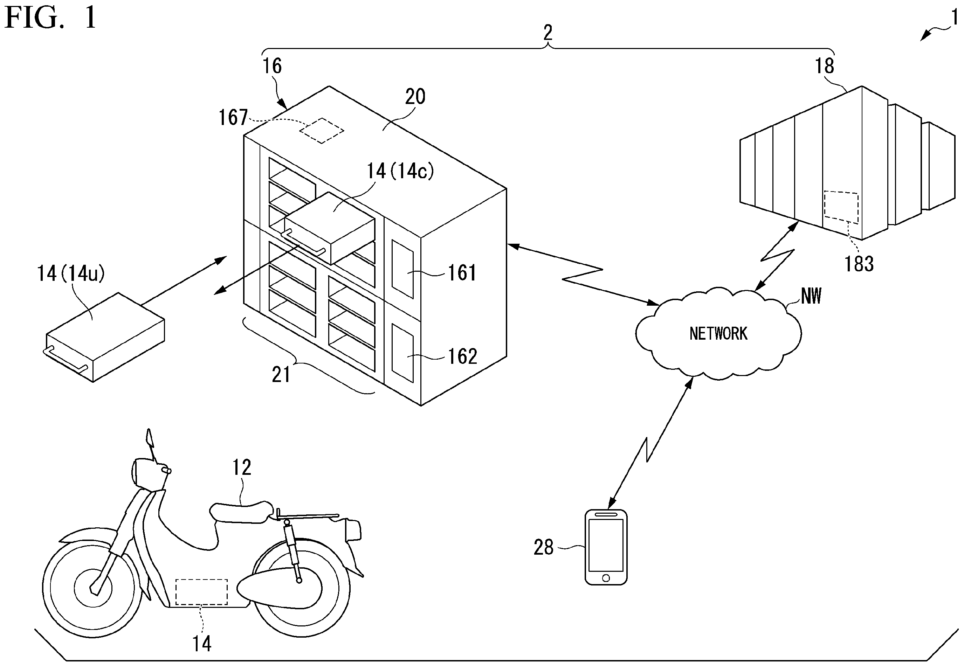

Fig. 1 is a view illustrating an overall configuration of a battery-sharing service system 1 (a battery deterioration suppression storage system and a charging system) in an embodiment.

As illustrated in Fig. 1, the battery-sharing service system 1 includes a straddle-type motorcycle 12 (straddle-type vehicle) which is a moving body, a detachable battery 14 (battery), a battery deterioration-suppressing storage device 2, and a mobile terminal 28. The battery deterioration-suppressing storage device 2 includes a charging station 16 (battery deterioration-suppressing storage device, charging device) and a management server 18 (server device).

The moving body includes a vehicle in addition to the motorcycle 12 illustrated in Fig. 1. An example of a moving body that is not a vehicle may be, for example, a portable charging/power-supply device carried by a person or a vehicle described in Japanese Unexamined Patent Application, First Publication No. 2019-068552. In addition, the moving body may be mobile robots, autonomous traveling devices, electric bicycles, autonomous traveling vehicles, other electric vehicles, drone flight vehicles, or other electric moving devices (electric mobility). Hereinafter, one embodiment using the motorcycle 12 as an example of the moving body will be described in detail.

The battery-sharing service system 1 is a system that provides a sharing service in which a plurality of users share the detachable battery 14 serving as a drive source of the motorcycle 12. The motorcycle 12 is an electric vehicle EV that travels due to electric power supplied from the detachable battery 14. In the embodiment, the straddle-type motorcycle 12 will be described as an example of the electric vehicle, but the electric vehicle may be electric bicycles, four-wheeled automatic vehicles, or the like.

The detachable battery 14 is a cassette-type electricity storage device that is detachably attached to the motorcycle 12 capable of traveling due to at least electric power. Hereinafter, for convenience of explanation, the detachable battery 14 may be distinguished such that the detachable battery 14 that needs to be charged is a "used battery 14u," and the detachable battery 14 in which charging has been completed is a "charged battery 14c." At least one detachable battery 14 is mounted on one motorcycle 12. A configuration of the detachable battery 14 will be described later.

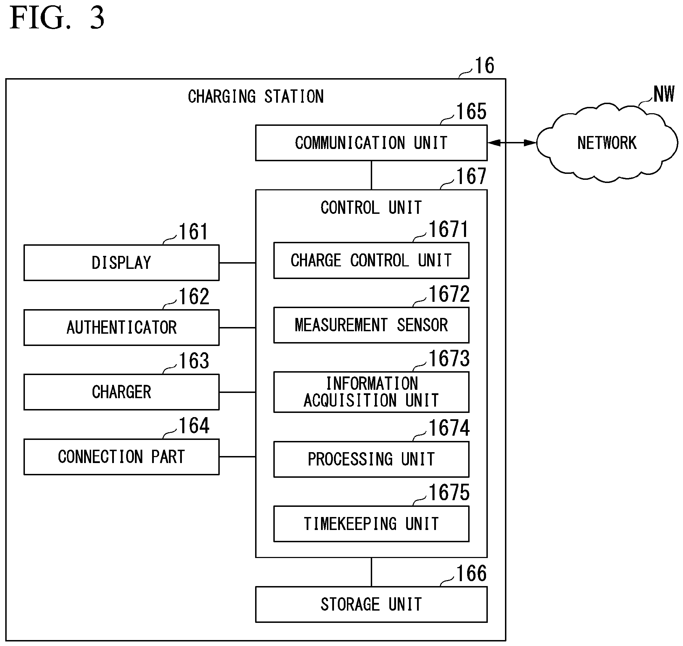

The charging station 16 is a facility for storing and charging one or more detachable batteries 14 and is installed at a plurality of places. A slot part 21 constituted by a plurality (12 in the example of Fig. 1) of slots, a display 161, and an authenticator 162 are provided in a housing 20 of the charging station 16. The charging station 16 is connected to be able to communicate with the management server 18 via a network NW The network NW is a wireless communication network or a wired communication network. A charger 163 (Fig. 3) capable of charging the detachable battery 14 and a connection part 164 (Fig. 3) are provided on a back side of the slot part 21. When the detachable battery 14 is lent, the charging station 16 transmits lending date/time information indicating a date and time when the battery was lent and a station ID which is identification information of the charging station 16 to the management server 18. The lending date/time information includes a date, a time, and a day of the week of the lending. The charging station 16 receives information indicating the number of detachable batteries 14 (number of batteries for use) to be prepared for each time period. The charging station 16 actively controls a state of charge (SOC) of each detachable battery 14 stored in the charging station 16 on the basis of the received number of batteries for use. Control of the SOC will be described later.

The management server 18 receives the lending date/time information and the station ID transmitted from the charging station 16. The management server 18 acquires local weather information at the lending date and time from, for example, the Internet via the network NW on the basis of the lending date/time information and the station ID. The weather information includes weather type (sunny, cloudy, rainy, snow, typhoon, or the like), and may also include information on temperature and humidity, pollen information, or the like. On the basis of the received information and the acquired weather information, the management server 18 obtains an expected value of the number of detachable batteries 14 to be used for replacement for each time period for each day of the week and weather type. The management server 18 transmits the number of batteries for use, which is the number of batteries to be prepared according to the obtained expected value, to the charging station 16 via the network NW The management server 18 is connected to be able to communicate with the charging station 16 and the mobile terminal 28 via the network NW

The mobile terminal 28 is a terminal carried by a user, and may be, for example, a smartphone, a tablet terminal, a laptop computer, or the like. The user operates the mobile terminal 28 to select and reserve one of the charging stations 16 capable of lending the detachable battery 14. The mobile terminal 28 transmits the operated result to the management server 18. The mobile terminal 28 receives point information transmitted from the management server 18 and displays the received point information on a display unit 2801.

### [Configuration of detachable battery 14]

Next, a configuration example of the detachable battery 14 will be described.

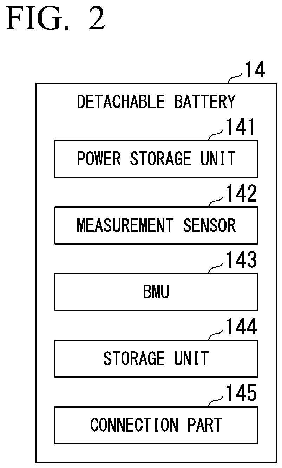

Fig. 2 is a diagram showing a configuration example of the detachable battery 14 according to the present embodiment. As shown in Fig. 2, the detachable battery 14 includes a power storage unit 141, a measurement sensor 142, a battery management unit (BMU) 143, a storage unit 144, and a connection part 145.

The power storage unit 141 may be, for example, any one of a secondary battery, a lead storage battery, a capacitor, a lithium ion battery, and the like.

The measurement sensor 142 is constituted by various sensors that measure a current or a temperature. The measurement sensor 142 outputs measured values to the BMU 143. The temperature sensor measures a temperature of the power storage unit 141. The current sensor measures a value of a current flowing through the power storage unit 141.

The BMU 143 is a battery management unit (battery management unit), and controls charging and power supply to the power storage unit 141. The BMU 143 may store, for example, a state of charge (SOC; remaining capacity) of the detachable battery 14 in the storage unit 144.

The storage unit 144 may store for example, identification information of the detachable battery 14, the SOC of the detachable battery 14, or the like. The storage unit 144 stores a program that causes the BMU 143 to execute processing.

The connection part 145 is a connection part to the slot part 21 of the charging station 16 and has a communication function.

### [Configuration of charging station 16]

Next, a configuration example of the charging station 16 will be described.

Fig. 3 is a diagram showing a configuration example of the charging station 16 according to the present embodiment. As shown in Fig. 3, the charging station 16 includes the display 161, the authenticator 162, the charger 163 (charging unit), the connection part 164, a communication unit 165, a storage unit 166, and a control unit 167 (acquisition unit).

The control unit 167 includes a charge control unit 1671, a measurement sensor 1672, an information acquisition unit 1673, a processing unit 1674, and a timekeeping unit 1675.

The charging station 16 receives electric power from a power grid (not shown).

The display 161 is any one of a liquid crystal display device, an organic electro luminescence (EL) display device, an electronic ink display device, and the like. The display 161 displays information output from the control unit 167. Displayed information may be, for example, a remaining capacity, a usage fee, or the like of the detachable battery 14.

The authenticator 162 is a device that reads recorded information of a near-field communication (NFC) card (not shown) carried by the user using, for example, NFC. Thereby, the charging station 16 reads a user ID included in the recorded information. The authenticator 162 outputs the acquired user ID to the control unit 167 and authenticates a user who has a right to use the sharing service on the basis of an authentication result output from the communication unit 165.

The charger 163 is a device that charges the detachable battery 14 under control of the control unit 167 in a state in which the connection part 145 of the detachable battery 14 and the connection part 164 of the charging station 16 are connected. A power source (not shown) for supplying electric power to the detachable battery 14 is connected to the charger 163.

The connection part 164 is a connection part to the detachable battery 14 and performs supply of electric power. The connection part 164 acquires battery information on the battery stored in the storage unit 144 of the detachable battery 14, and outputs the acquired battery information to the information acquisition unit 1673. The connection part 164 outputs lending information indicating that the detachable battery 14 has been lent to the information acquisition unit 1673 when the detachable battery 14 is removed.

The communication unit 165 transmits the lending date/time information and the station ID output from the control unit 167 to the management server 18 via the network NW. The communication unit 165 receives information indicating the number of detachable batteries 14 prepared for each time period (the number of batteries for each time period) and outputs the received number of batteries for use for each time period to the processing unit 1674. The communication unit 165 receives reservation information of the detachable battery 14 transmitted from the management server 18, and outputs the received reservation information of the detachable battery 14 to the control unit 167. The communication unit 165 receives an authentication result of authentication performed by the management server 18 and outputs the received authentication result to the authenticator 162.

The storage unit 166 stores the station ID, which is the identification information of the charging station 16, and stores battery information or the like when the detachable battery 14 is returned. The storage unit 166 stores the number of batteries for use for each time period. The storage unit 166 stores a program that causes the control unit 167 to execute processing.

The control unit 167 acquires the lending information output from the connection part 164 and outputs the lending date/time information and the station ID at the time of acquiring the lending information to the communication unit 165. When the detachable battery 14 is returned, the control unit 167 actively controls the SOC of the detachable battery 14 on the basis of the number of batteries for use for each time period output from the communication unit 165. When a user is successfully authenticated by the authenticator 162 the control unit 167 permits the user to rent the detachable battery 14.

The control unit 167 functions as the charge control unit 1671, the information acquisition unit 1673, the processing unit 1674, and the timekeeping unit 1675 by reading and executing the program stored in the storage unit 166.

The charge control unit 1671 controls the charger 163 to control charging of the detachable battery 14 inserted in the slot part 21 on the basis of the battery information output from the information acquisition unit 1673 and a measured value of the measurement sensor 1672.

The measurement sensor 1672 may be, for example, a current sensor or a voltage sensor. The measurement sensor 1672 measures a current value flowing through the detachable battery 14 and a voltage value thereof and outputs the measured measurement values to the charge control unit 1671.

The information acquisition unit 1673 acquires the battery information output by the detachable battery 14 connected to the connection part 164 and outputs the acquired battery information to the charge control unit 1671.

When the processing unit 1674 acquires the lending information output from the connection part 164, the processing unit 1674 uses a present date and time generated by the timekeeping unit 1675 as the lending date/time information and outputs the lending date/time information and the station ID stored in the storage unit 166 to the communication unit 165. The processing unit 1674 stores the number of batteries for use for each time period output from the communication unit 165 in the storage unit 166. When the detachable battery 14 is returned, the processing unit 1674 actively controls the SOC of the detachable battery 14 by controlling whether to charge the detachable battery 14 on the basis of the number of batteries for use for each time period stored in the storage unit 166.

The timekeeping unit 1675 includes an oscillation circuit and a frequency-dividing circuit. The timekeeping unit 1675 generates a present date and time by timing using a reference clock generated by the oscillation circuit and the frequency-dividing circuit on the basis of, for example, the date and time information acquired from the network NW

### [Configuration of management server 18]

Next, a configuration example of the management server 18 will be described.

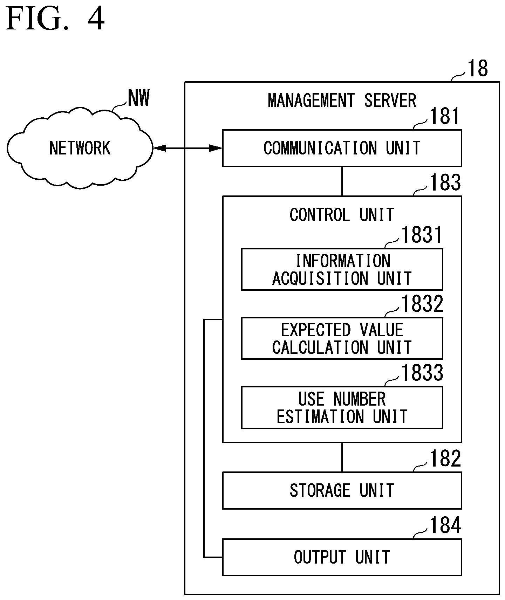

Fig. 4 is a diagram showing a configuration example of the management server 18 according to the present embodiment. As shown in Fig. 4, the management server 18 includes a communication unit 181, a storage unit 182, a control unit 183 (acquisition unit), and an output unit 184. The control unit 183 includes an information acquisition unit 1831, an expected value calculation unit 1832, and a use number estimation unit 1833.

The communication unit 181 receives the lending date/time information and the station ID transmitted from the charging station 16 via the network NW and outputs the received lending date/time information and the station ID to the control unit 183. The communication unit 181 transmits the number of batteries for use for each time period output from the control unit 183 to the charging station 16 via the network NW

The storage unit 182 stores an expected value of the number of replacement batteries for each time period for each day of the week and weather type. The storage unit 182 stores the station ID in association with information indicating a location of the charging station 16 (address, town name, latitude and longitude, or the like). The storage unit 182 stores a program that causes the control unit 183 to execute processing.

The information acquisition unit 1831 acquires the lending date/time information and the station ID output from the communication unit 181. When the information acquisition unit 1831 acquires the lending date/time information and the station ID, the information acquisition unit 1831 acquires weather information at the lending date and time via the communication unit 181 on the basis of the location information stored in the storage unit 182 in association with the station ID. The information acquisition unit 1831 outputs the acquired weather information, lending date/time information, and station ID to the expected value calculation unit 1832.

The expected value calculation unit 1832 acquires the weather information, the lending date/time information, and the station ID output from the information acquisition unit 1831. The expected value calculation unit 1832 calculates an expected value of the number of replacement batteries for each time period for each day of the week and weather type and for each station using the acquired weather information and lending date/time information. The expected value calculation unit 1832 stores the calculated expected value of the number of replacement batteries for each time period for each day of the week and weather type in the storage unit 182.

The use number estimation unit 1833 estimates the number of detachable batteries 14 prepared for each time period for each day of the week and weather type and for each station according to the expected value stored in the storage unit 182. The use number estimation unit 1833 outputs information indicating the expected number of detachable batteries 14 prepared for each time period for each day of the week and weather type (information on the number of batteries for use for each time period) to the communication unit 181.

The use number estimation unit 1833 may output the information indicating the expected number of detachable batteries 14 prepared for each time period for each day of the week and weather type (information on the number of batteries for use for each time period) to the output unit 184.

The output unit 184 is an image display device, a printing device, or the like. For each station output by the use number estimation unit 1833, the output unit 184 displays or prints the number of detachable batteries 14 prepared for each time period for each day of the week and weather type (the number of batteries for use for each time period).

### [State of detachable battery 14 stored in charging station 16]

Next, a state of the detachable battery 14 stored in the charging station 16 will be described.

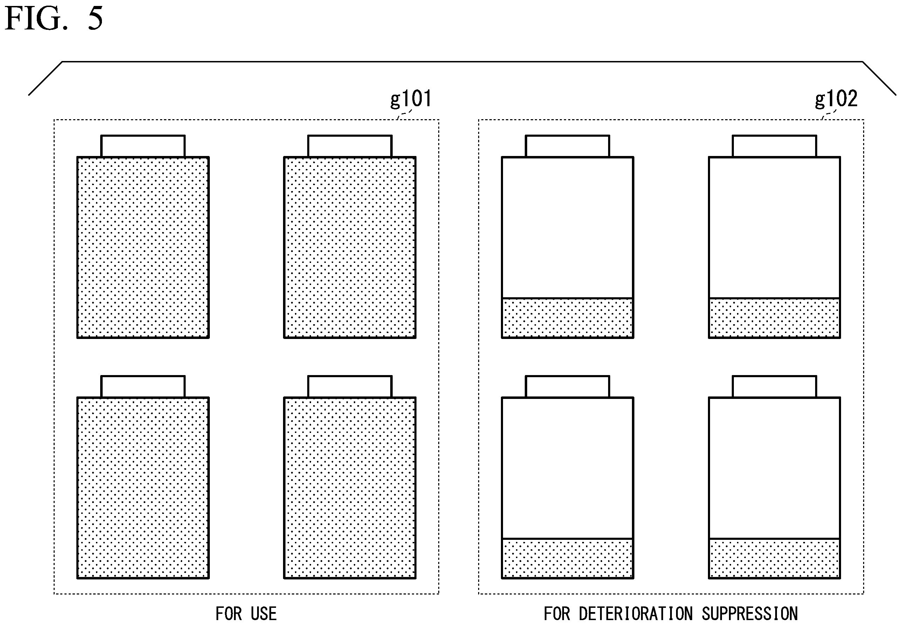

Fig. 5 is a view illustrating a state example of the detachable batteries 14 stored in the charging station 16 according to the present embodiment. Fig. 5 illustrates an example in which a total number of detachable batteries 14 stored in the charging station 16 is eight.

In the example illustrated in Fig. 5, the number for use received from the management server 18 is four. Therefore, the charging station 16 stores four fully charged detachable batteries 14 for use as denoted by reference sign g101 and the remaining four detachable batteries 14 for deterioration suppression as denoted by reference sign g102. The detachable battery 14 for deterioration suppression is in a returned state and a low SOC state.

### [Expected value and number of batteries for use]

Next, an expected value and the number of batteries for use will be described.

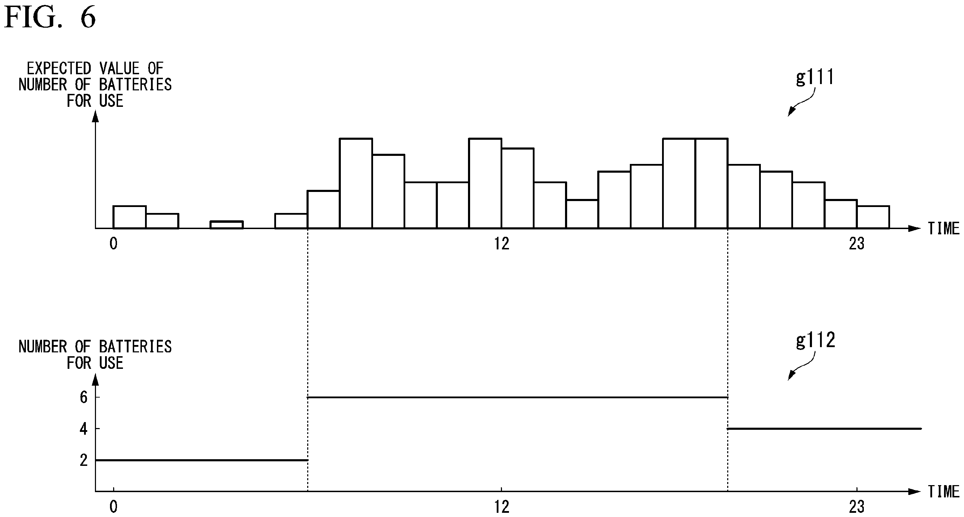

Fig. 6 is a diagram showing an expected value and the number of batteries for use according to the present embodiment.

In Fig. 6, reference sign gill indicates an expected value, and reference sign g112 indicates the number of batteries for use. In the diagram indicated by reference sign g111, the horizontal axis represents time (hour), and the vertical axis represents an expected value (piece) of the number of batteries for use. In the diagram indicated by reference sign g112, the horizontal axis represents time (hour), and the vertical axis represents the number (piece) of batteries for use. Fig. 6 shows an expected value and the number of batteries for use in a case of a predetermined day of the week and weather type. In the following, the expected value and the number of batteries for use when the weather is sunny will be described.

In the example of reference sign g111, an expected value from 0:00 to 1:00 is three, an expected value from 1:00 to 2:00 is two, an expected value from 2:00 to 3:00 is zero, and so on.

The expected value calculation unit 1832 calculates the expected value of the number of batteries for use for each time period on the basis of the lending date/time information received when the weather is sunny. The expected value calculation unit 1832 may obtain, for example, an average value of the detachable battery 14 lent from 0:00 to 1:00 on a sunny day and calculate the obtained average value as the expected value.

In the example of reference sign g112, the number of batteries for use from 0:00 to 6:00 is two, the number of batteries for use from 6:00 to 19:00 is six, and the number of batteries for use from 19:00 to 24:00 is four.

The use number estimation unit 1833 may estimate the number of batteries for use from 0:00 to 7:00 by obtaining an average value of, for example, an expected value from 0:00 to 1:00, an expected value from 1:00 to 2:00, an expected value from 2:00 to 3:00, an expected value from 4:00 to 5:00, and an expected value from 5:00 to 6:00, and an expected value from 6:00 to 7:00. The use number estimation unit 1833 may estimate a maximum value of expected values in a time period being obtained as the number of batteries for use.

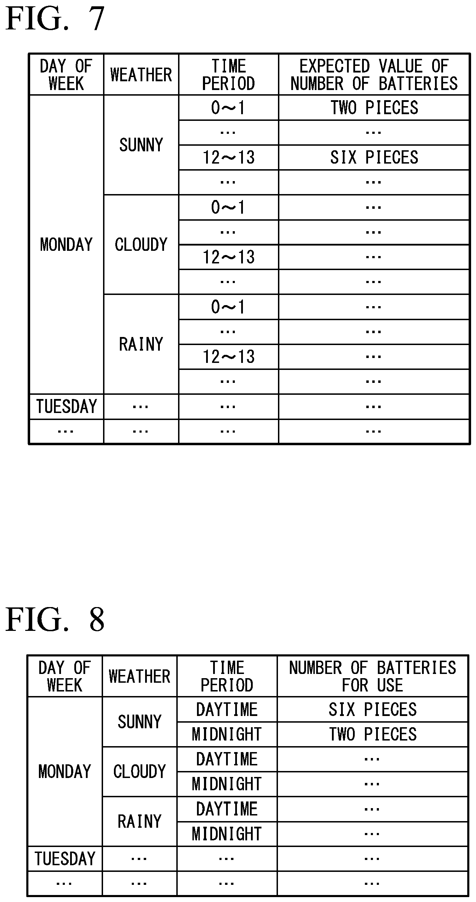

Fig. 7 is a diagram showing an example of expected values stored in the storage unit 182 of the management server 18 according to the present embodiment. The example shown in Fig. 7 is an example in which the storage unit 182 stores expected values of the number of batteries for each time period of every hour for each day of the week and each weather type. For example, the storage unit 182 may store an expected value (two) of the batteries in association with a time period from 0:00 to 1:00 on Monday and sunny weather.

The example shown in Fig. 7 is an example, and the storage unit 182 stores an expected value of the number of batteries for each time period in association with at least one of a day of the week and weather type.

Fig. 8 is a diagram showing an example of the number of batteries for use stored in the storage unit 182 of the management server 18 according to the present embodiment. In the example shown in Fig. 8, the storage unit 182 stores the number of batteries for use for time periods of daytime and midnight in association with each day of the week and each weather type. For example, the storage unit 182 may store the number of batteries for use (six) in association with a time period of daytime on Monday and sunny weather.

The example shown in Fig. 8 is an example, and the storage unit 182 stores the number of batteries for use for each time period in association with at least one of a day of the week and weather type.

### [Preparation processing]

Next, preparation processing performed by the charging station 16 and the management server 18 will be described.

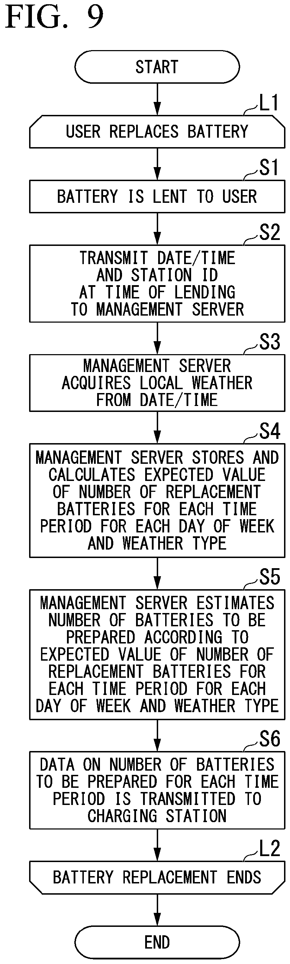

Fig. 9 is a flowchart of preparation processing performed by the charging station 16 and the management server 18 according to the present embodiment.

(Step L1) A user visits the charging station 16 and starts replacement work of the detachable battery 14.

(Step S1) After the user returns the detachable battery 14, the control unit 167 of the charging station 16 lends the charged detachable battery 14 to the user.

(Step S2) The control unit 167 of the charging station 16 transmits lending date/time information, which is a date and time at the time of the lending, and a station ID to the management server 18 using the communication unit 165.

(Step S3) The control unit 183 of the management server 18 receives the lending date/time information and the station ID transmitted from the charging station 16 and stores the received lending date/time information and station ID in the storage unit 182. Next, the control unit 183 acquires local weather information at the time of the lent date and time from the Internet or the like by the communication unit 181 via the network NW on the basis of the lending date/time information and the station ID.

(Step S4) The expected value calculation unit 1832 of the management server 18 calculates an expected value of the number of replacement batteries for each time period for each day of the week and weather type on the basis of the lending date/time information received from the charging station 16 and the acquired weather information and then stores the calculated expected value in the storage unit 182.

(Step S5) The use number estimation unit 1833 of the management server 18 estimates the number of batteries (number of batteries for use) to be prepared for each time period for each day of the week and weather type according to the expected value of the number of replacement batteries for each time period for each day of the week and weather type stored in the storage unit 182.

(Step S6) The use number estimation unit 1833 of the management server 18 transmits the number of batteries (number of batteries for use) to be prepared for each estimated time period to the charging station 16 by the communication unit 181.

(Step L2) The replacement work of the detachable battery 14 ends.

In the example shown in Fig. 9, an example has been described in which the charging station 16 transmits the lending date/time information and the station ID during the replacement work of the detachable battery 14, and the management server 18 calculates the expected value and estimates the number of batteries to be prepared for each time period, but the present invention is not limited thereto. The charging station 16 may transmit the lending date/time information and the station ID, for example, at a predetermined time, or may transmit the lending date/time information and the station ID when the number of lendings reaches a predetermined number. Similarly, the management server 18 may calculate the expected value and estimate the number of batteries to be prepared for each time period at a predetermined time. For example, the management server 18 may transmit the number of batteries for use for each time period for one day to the charging station 16 once a day at a predetermined time.

### [Charging determination processing]

Next, charging determination processing performed by the charging station 16 will be described.

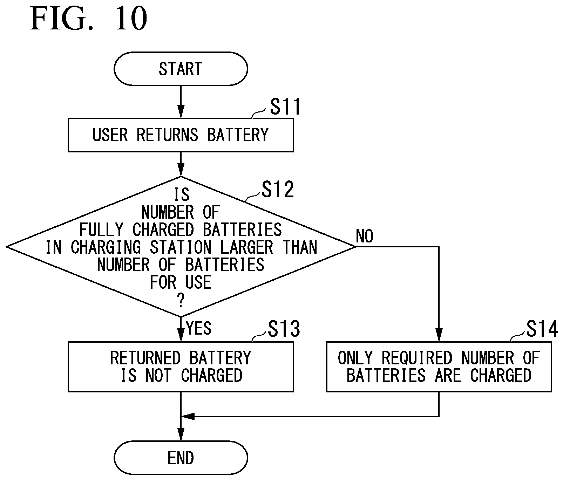

Fig. 10 is a flowchart of the charging determination processing performed by the charging station 16 according to the present embodiment.

(Step S11) When the detachable battery 14 is connected to the connection part 164, the control unit 167 of the charging station 16 determines that the detachable battery 14 has been returned.

(Step S12) The control unit 167 reads the number of batteries for use in a time period corresponding to the returned time from the storage unit 166. Next, the control unit 167 determines whether or not the number of fully charged batteries in the charging station is larger than the number of batteries for use. When the control unit 167 determines that the number of fully charged batteries in the charging station is larger than the number of batteries for use (step S12; YES), the control unit 167 proceeds to processing of step S13. When the control unit 167 determines that the number of fully charged batteries in the charging station is not larger than the number of batteries for use (step S12; NO), the control unit 167 proceeds to processing of step S14.

(Step S13) The control unit 167 does not perform charging of the returned detachable battery 14. The control unit 167 ends the processing.

(Step S14) The control unit 167 performs charging of the returned detachable battery 14. That is, the control unit 167 determines the number of batteries to be charged among the plurality of batteries on the basis of the number of batteries for use and charges a determined number of batteries. Alternatively, the control unit 167 may determine the number of batteries that are not charged among the plurality of batteries on the basis of the number of batteries for use. The control unit 167 ends the processing.

The control unit 167 performs the processing of steps S12, S13, and S14 every predetermined time (for example, 10 minutes). Therefore, when the fully charged batteries for use are used, the control unit 167 also performs charging of the batteries for deterioration suppression.

In Fig. 10, an example in which the processing is performed when the detachable battery 14 is returned has been described, but a timing for performing the processing may also be when a battery is lent or when a battery has been lent. Thereby, according to the present embodiment, the control can be performed in accordance with timing of use by the user by controlling at least one of the number of batteries to be charged and the number of batteries not to be charged for the plurality of detachable batteries 14 in at least one of timings when the detachable battery 14 is lent or has been lent from the charging station 16 and when the detachable battery 14 is returned to the charging station 16.

Specifically, for example, when the number of batteries for use is six and the present number of fully charged batteries is four, if a plurality of detachable batteries 14 are returned, the control unit 167 performs charging of two of them and does not perform charging of the remaining two.

An example in which the management server 18 transmits the number of batteries for use to the charging station 16 has been described in the above-described example, but the present invention is not limited thereto. The management server 18 may transmit the number of batteries for deterioration suppression stored in a low SOC state without being charged to the charging station 16. Alternatively, the management server 18 may transmit proportions of the number of batteries for use and the number of batteries for deterioration suppression to the charging station 16.

An example in which the management server 18 estimates the number of batteries for use for each charging station has been described in the above-described example, but the present invention is not limited thereto. The management server 18 may estimate the number of batteries for use for a plurality of charging stations 16 included in a predetermined range.

An example in which the management server 18 acquires weather information has been described in the above-described example, but the present invention is not limited thereto. The charging station 16 may acquire weather information from the Internet via the network NW and the weather information may be added to the lending date/time information and the station ID to be transmitted to the management server 18.

As described above, in the present embodiment, the management server 18 controls the SOC of the detachable battery 14 so that deterioration suppression is possible on the basis of a date and time when the detachable battery 14 is lent and weather type at the lent location, that is, on the basis of usage information of the detachable battery 14 of the user. That is, the management server 18 determines proportions of the battery for use and the battery for deterioration suppression from usage state data of the user. Then, the charging station 16 prepares fully charged batteries for use and stores batteries other than the fully charged batteries for use in a low SOC state for deterioration suppression according to the control of the management server 18. Then, when the batteries for use are used, the charging station 16 also charges the batteries for deterioration suppression.

Thereby, according to the present embodiment, the SOC for optimum storage can also be adjusted according to the usage state of the user. Also, according to the present embodiment, deterioration of the battery is suppressed and the battery can be used for a long period of time compared to a case in which charging is started at the moment when the battery is loaded in the charging station 16.

An example in which the management server 18 performs calculation of the expected value and estimation of the number of batteries for use has been described in the above-described example, but processing for these may be performed by the charging station 16.

One embodiment of the present invention is a battery deterioration-suppressing storage device 2 including a detachable battery 14 detachably attached to a motorcycle 12 that is movable utilizing electric power, and a control unit 167 controlling at least one of the number of batteries to be charged and the number of batteries not to be charged for a plurality of detachable batteries 14 on the basis of a state in which the detachable battery 14 has been used by a user.

Another embodiment of the present invention is a battery-sharing service system 1 including a detachable battery 14 detachably attached to a motorcycle 12 that is movable utilizing electric power, a charging station 16 performing charging of the detachable battery 14 and configured to transmit lending date/time information indicating a date and time when the detachable battery 14 was lent to a management server 18 and control at least one of the number of batteries to be charged and the number of batteries not to be charged for a plurality of detachable batteries 14 on the basis of received control information from the management server 18, and the management server 18 generating the control information that controls at least one of the number of batteries to be charged and the number of batteries not to be charged for the plurality of detachable batteries 14 on the basis of the lending date/time information received from the charging station 16 and configured to transmit the generated control information to the charging station 16.

Some or all of the processing performed by the battery deterioration-suppressing storage device 2 may be performed by recording a program for realizing all or part of the functions of the battery deterioration-suppressing storage device 2 of the present invention on a computer-readable recording medium and causing a computer system to read and execute the program recorded on the recording medium. Further, the "computer system" mentioned herein is configured to include an operating system (OS) or hardware such as peripheral devices. The "computer system" is configured to also include a WWW system in which a homepage-providing environment (or display environment) is provided. Also, the "computer-readable recording medium" refers to a portable medium such as a flexible disk, a magneto-optical disk, a read-only memory (ROM), or a compact disc read-only memory (CD-ROM), and a storage device such as a hard disk incorporated in a computer system. Further, the "computer-readable recording medium" is configured to also include a medium that holds a program for a certain period of time such as a volatile memory (random-access memory (RAM)) in a computer system serving as a server or a client when a program is transmitted via a network such as the Internet or a communication link such as a telephone circuit.

Also, the above-described program may be transmitted to other computer systems from the computer system storing the program in a storage device or the like via a transmission medium or by transmission waves in the transmission medium. Here, the "transmission medium" for transmitting the program refers to a medium having a function of transmitting information, such as a network (communication network) like the Internet or a communication link (communication line) like a telephone circuit. Also, the above-described program may be a program for realizing some of the above-described functions. Further, the program may be a so-called differential file (differential program) which realizes the above-described functions in combination with a program already recorded on the computer system.

Although embodiments for implementing the present invention have been described above, the present invention is not limited to these embodiments at all, and various modifications and substitutions can be added within the scope of the present invention without departing from the gist of the present invention.

### DESCRIPTION OF THE REFERENCE SYMBOLS

1 Battery-sharing service system (charging system)
2 Battery deterioration-suppressing storage device
12 Motorcycle
13 TCU
14 Detachable battery
16 Charging station (charging device)
18 Management server
28 Mobile terminal
141 Power storage unit
142 Measurement sensor
143 BMU
144 Storage unit
145 Connection part
161 Display
162 Authenticator
163 Charger (charging unit)
164 Connection part
165 Communication unit
166 Storage unit
167 Control unit (acquisition unit)
1671 Charge control unit
1672 Measurement sensor
1673 Information acquisition unit
1674 Processing unit
1675 Timekeeping unit
181 Communication unit
182 Storage unit
183 Control unit (acquisition unit)
184 Output unit
1831 Information acquisition unit
1832 Expected value calculation unit
1833 Use number estimation unit

## Claims

1. A charging system, comprising:
a battery which is detachably attached to a moving body which is movable utilizing electric power;
a charging device which charges a plurality of batteries; and
an acquisition unit which acquires a number of batteries to be charged and/or a number of batteries not to be charged among the plurality of batteries based on battery usage information indicating a usage state of the batteries of a user.

2. The charging system according to Claim 1,
wherein the acquisition unit calculates an expected value of the number of batteries used for each time period based on the battery usage information and acquires the number of batteries to be charged and/or the number of batteries not to be charged among the plurality of batteries based on the calculated expected value.

3. The charging system according to Claim 1,
wherein the acquisition unit calculates an expected value of the number of batteries used for each day of the week and for each time period based on the battery usage information and acquires the number of batteries to be charged and/or the number of batteries not to be charged among the plurality of batteries based on the calculated expected value.

4. The charging system according to Claim 1,
wherein the acquisition unit calculates an expected value of the number of batteries used for each weather type and for each time period based on the battery usage information and acquires the number of batteries to be charged and/or the number of batteries not to be charged among the plurality of batteries based on the calculated expected value.

5. The charging system according to any one of Claims 1 to 4,
wherein the acquisition unit acquires the number of batteries to be charged and/or the number of batteries not to be charged among the plurality of batteries when the battery is lent from the charging device or when the battery is returned to the charging device.

6. The charging system according to any one of Claims 1 to 5,
wherein the battery usage information is lending date/time information indicating a date and time when the battery is lent.

7. A charging device, comprising:
a charging unit which charges a plurality of batteries detachably attached to a moving body which is movable utilizing electric power; and
an acquisition unit which acquires a number of batteries to be charged and/or a number of batteries not to be charged among the plurality of batteries based on battery usage information indicating a usage state of the batteries of a user.

8. A charging method, comprising:
a step of charging a plurality of batteries detachably attached to a moving body which is movable utilizing electric power; and
a step of acquiring a number of batteries to be charged and/or a number of batteries not to be charged among the plurality of batteries based on battery usage information indicating a usage state of the batteries of a user.

9. A program which causes a computer to execute:
a step of charging a plurality of batteries detachably attached to a moving body which is movable utilizing electric power; and
a step of acquiring a number of batteries to be charged and/or a number of batteries not to be charged among the plurality of batteries based on battery usage information indicating a usage state of the batteries of a user.

10. A computer-readable storage medium comprising the program according to Claim 9.
